# EUROPEAN PATENT APPLICATION

(11) **EP 1 136 911 A1**
(43) Date of publication of application: **26.09.2001**
(21) Application number: 01106089.4
(22) Date of filing: 13.03.2001
(51) Int. Cl.: G06F 9/50, G06F 1/00

(54) **Content-providing system**

(30) Priority: 15.03.2000 JP 2000072350
(71) Applicant: Tanahashi, Kenichi, Tokyo (JP)
(72) Inventor: Tanahashi, Kenichi, Tokyo (JP)
(74) Representative: Weiss, Peter, Dr.

(57) **Abstract**

The purpose of this invention is to prevent damages caused by illegal copying in a system of providing a user with a content including music, games and others through any communication network.

An optional content is transmitted from a contents site of a content provider to a user through a communication network, and the user receives the transmitted content, but if the user copies the received content, the data on his recording is notified to the provider's contents site.

## Description

### BACKGROUND OF THE INVENTION

### 1. Field of the Invention

The present invention relates to a content-providing system to provide a user with a required content through a communication network.

### 2. Brief Description of the Related Art

In recent years, it is popular to provide a content required by a user through a communication network such as the Internet. For example, electronic books, movies, news or games are popularly enjoyed by downloading them onto users' home-use personal computers or game machines.

In the above-mentioned conventional content-providing system, it causes no problem when a user is receiving a content through his own personal computer without copying it. However, if the received content is copied on a CDR disk or printed on paper through a printer, there is a possibility that the content is widely distributed to others, which can bring to the content provider (hereinafter to be called 'provider') damages caused by infringement of copyright.

### SUMMARY OF THE INVENTION

The present invention was carried out to solve the above-mentioned problem, as it enables a provider to grasp the copying status of the content transmitted through a recording media, thereby realizing a safe content-providing system without any damage caused by illegal copying.

The content-providing system of the present invention is comprising a contents site for transmitting an optional content to a user through a communication network and a user's terminal for receiving the transmitted content, and when a desired content is copied by a recording media, it is notified to the contents site of a provider that the content has been copied by said recording media.

Further, the copying frequency of each content, as well as that by each recording media, is also notified to the contents site of the provider.

### BRIEF DESCRIPTION OF THE DRAWINGS

FIG. 1 is a block diagram illustrating the structure of the embodiment of the present invention.

FIG. 2 is a flow chart showing the procedure of the system of the embodiment.

### DETAILED DESCRIPTION OF THE PREFERRED EMBODIMENTS

Detailed description of the preferred embodiment of the present invention is provided herein.

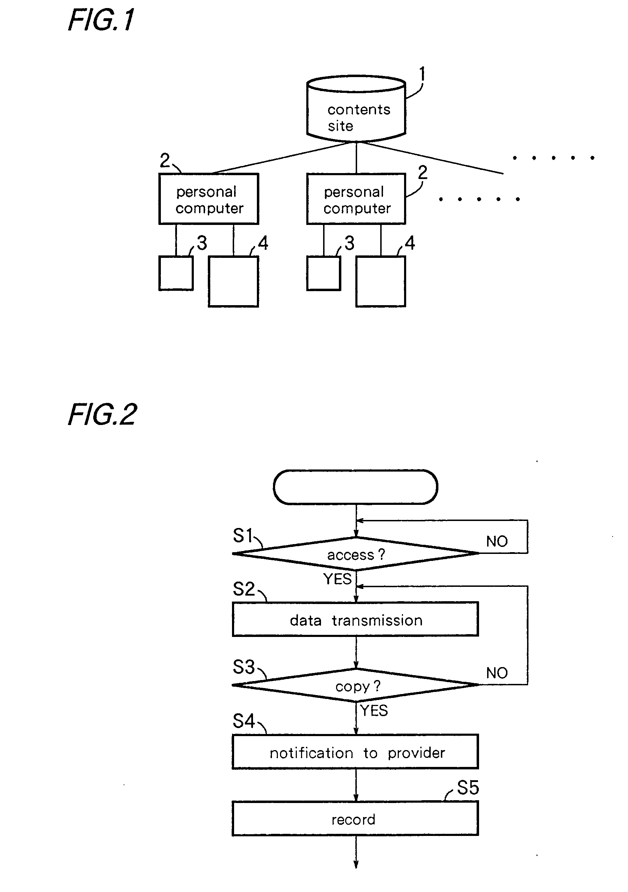

FIG. 1 is a block diagram illustrating a basic structure of the embodiment of this invention. In this figure, a numeric sign 1 is a contents site where a plural number of contents are stored in a data base from which an optional content is transmitted to a user via the Internet or any other communication network. Numeric signs 2, 2 .... are respectively personal computers as users' terminals (platforms) for receiving a content transmitted via above-mentioned network. A numeric sign 3 is a CDR drive connected to the personal computer 2, and a sign 4 is a printer connected to the personal computer 2.

In the above―constituted system, it causes no problem when a user is receiving a required content through his personal computer 2 and utilizes the content by himself without copying it. But if a user copies the received content on a CDR disk or outputs the copy by a printer 4, information on his copying is notified to the contents site of a provider. Thus the provider can grasp the copying status of the transmitted content, so that he can exercise the copyright law or claim the prescribed service fee to prevent damages caused by illegal copying.

Further, the copying frequency not only of each content but also by each recording media can be notified to the contents site of the provider. Therefore, the provider can know the detailed copying status by an individual user or a corporate user, and at the same time he can obtain the data on what kind of content is currently desired by a user, which is helpful for his future content-providing business.

Figure 2 is a flow chart showing an outlined procedure of the system of the above-mentioned embodiment. The processes shown in this flow chart are executed by a program which is previously stored in a main CPU of the system.

If there is an access by a user for a content (S1), the accessed content is transmitted via a communication network (S2). And if the user records the received content by copying (S3), the copying frequency is notified to the contents site (S4). Then, on the side of the contents site, the user's name, the title of the transmitted content, the content-copying frequency, etc. are recorded in the data base (S5).

The system according to the present invention may handle various kinds of contents, such as electronic books, movies, news, games, music, paintings and others. The recording media may also be any other kinds than that of the embodiment stated herein.

As mentioned above, the present invention enables a provider to grasp the data on copying of a content received by a user onto a recording media, thereby preventing damages caused by illegal copying.

At the same time, the provider can know type(s) of content(s) desired by the user, which is helpful for his future content-providing business.

## Claims

1. A content-providing system comprising:
a contents site to transmit to a user an optional content via a communication network; and
a terminal to receive the content transmitted via said communication network, wherein:
if an optional content is copied onto a recording media from said terminal, it is notified to the contents site of a content provider that the content has been copied onto said recording media from said terminal.

2. The content-providing system according to Claim 1, wherein:
the copying frequency of each content is notified to the contents site of a content provider.

3. The content-providing system according to Claim 1 or Claim 2, wherein:
the copying frequency onto each recording media is notified to the contents site of a content provider.
